# EUROPEAN PATENT APPLICATION

(11) **EP 2 323 092 A1**
(43) Date of publication of application: **18.05.2011**
(21) Application number: 09014104.5
(22) Date of filing: 11.11.2009
(51) Int. Cl.: G06Q 30/00

(54) **Communication and telephone helpline system**

(71) Applicant: Marcelo Vallarino, Jorge, Capital Federal (AR)
(72) Inventor: Marcelo Vallarino, Jorge, Capital Federal (AR)
(74) Representative: Molina Garcia, Julia

(57) **Abstract**

The invention relates to a communication and telephone helpline system especially designed for establishing communication between one or more portable communication terminals carried by people visiting a country, for example cellular telephones, and an integral call and service center for callers. The communication terminals include one or more previously recorded numbers for connecting with the call center of the visited country or of other countries, and the call center has the suitable means to respond to the call of the tourist or visitor in his or her own language. Furthermore, the call center is likewise able to forward any incoming call to other peripheral call centers for other specific services.

## Description

### Object of the Invention

The present invention relates to a communication and telephone helpline system, which provides essential novelty features and considerable advantages with respect to the means know and used for the same purposes in the current state of the art.

More particularly, the invention proposes the development and implementation of a system especially designed for helping people who, for reasons such as not knowing the language spoken in a certain area or country, encounter difficulties in moving around the area or communicating with centers or organisms of the type that may need any type of information or aid during the stay in that area or country, in which the system is made up of a wide variety of preferably portable-type telephone terminals (cellular telephones), each of them advantageously containing one or more pre-recorded telephone numbers which allow connecting with a call center corresponding to a respective country, and the call center of which is able to respond to the calls in the caller's language, and eventually includes communication means authorized to forward any call received from external mobile terminals to other peripheral call and/or information or service centers.

The field of application of the invention is comprised within the communications sector in general.

### Background and Summary of the Invention

Everyone generally knows the difficulties a visitor in a country may encounter when he or she does not know the language of the country being visited and needs to access some type of information or service, a difficulty which is aggravated when the language has a range of vocabulary lacking any similarity with the visitor's native language. This situation is usually made clear when a tourist or visitor must contact with services such as, for example, a credit card company, a healthcare company, an embassy or consulate, tourism service providers, or other similar companies, for which purpose he or she must use an agenda, or call the information services of the telephone company in the country he or she is in, with the subsequent language difficulties, or he or she must as a last resort call a telephone number in his or her country of origin where he or she can be assisted in the language that the person understands.

The situation is equally complex when on a country as a tourist, the visitor wants to know the recommended tourist areas or move around the city, where everything is new and where, depending on the country, even the alphabet used may be different as well, making it virtually impossible for the visitor to identify the name of a street, a traffic sign, or any other public information.

The same occurs when a tourist or visitor wants to travel through typical shopping areas, where not knowing the local language is a barrier that often times cannot be overcome due to the buyer's inability to establish a direct relationship with the seller for the purpose of communicating his or her wishes in terms of types of objects he or she wishes to purchase, sizes, heights, colors, etc., in this case having to limit himself or herself to what is directly visible and within reach.

Today there are already some centers that provide certain help for travelers and visitors. These centers are usually associated with airlines, in which the information that is provided is limited to information about air transport. Other known centers provide some information about specific and concrete services, without there being any knowledge of the current existence of a center in which the visitor is provided with an integral centralized service with the use of different telephone numbers that are normally not available and are in his or her own language.

The situations considered above are a real limitation for people who are interested in tourism but many times give up on their intentions simply because they do not know the local language or any other language by means of which they can communicate with the inhabitants of the chosen country.

Taking the foregoing into account, the present invention proposes the implementation of a communications system by means of which the aforementioned drawbacks are rectified as the main objective. This objective has been fully met by means of the system which will be described below, and whose main features are included in the attached claim 1.

Essentially, the system of the invention is structured on the basis of a wide variety of communication means, such as portable (cellular) telephones, each of them prepared to be given to a person (tourist) who requests one. An integral call and helpline center for the caller is able to respond to the call in the actual language of the person making the call, providing him or her with all the information that may be needed according to the needs at all times. Likewise, the call center may be able, where appropriate, to forward any incoming call to any one of a number of other centers in which more specific and concrete solutions about certain services that the visitors request are provided.

### Description of Preferred Embodiment

As mentioned above, the present invention is aimed at a communication and telephone helpline system by means of which a person making a call to an integral call and service center is provided with complete information about the required service, the person being helped in his or her own language and thus avoiding difficulties derived from not knowing the language of the visited area or country. For this purpose, the system is implemented based on establishing telephone communication between a portable communication means, such as a cellular telephone, and a call center, each of the portable communication means being programmed with one or more telephone numbers belonging to as many other countries, and by means of which immediate communication is established with the call center of that respective country to which the number dialed from the portable communication means belongs. The call center as physical and human resources to help the caller in his or her own language, as previously stated, for which purpose it incorporates translation units and services, on-line interpretation services, and other tourist information services relating to the visited country.

Therefore, a person making a call to the call center can instantly resolve any need or problem occurring at that time. Additionally, the call center is likewise able to forward any call, where appropriate, to other peripheral and likewise authorized centers to provide a specific suitable service to the visitor that cannot be done in the call center, as occurs in those cases in which the visitor requires a specific service not offered by the call center.

For correct implementation of the system of the invention, it is necessary to make available to the tourist the necessary means so that he or she can make use of the service that is offered immediately. Thus, when the tourist arrives in the country in question, he or she receives a cellular telephone as a portable communication means, from which telephone he or she can access the integral call center. The telephone can be received by the tourist in a rental or sale scheme, according to the different alternatives, and can be used after that time in relation to the country in which he or she is located. The service can be paid for through a pre-paid card, or by means of charging a credit card that the customer provides to the service provider.

Each tourist is thus related with one telephone in particular, so that he or she can receive messages continuously from the service provider, and more particularly in text message format, in his or her own language, relating to the areas or information of interest, advertisements for traveling or excursions in or outside the city, restaurants, recreational offers, recommended shopping establishments, etc. The calls within the country will be billed at the price of a local call, which entails very favorable operating conditions for the tourist. According to the different alternative versions offered by the system, the tourist can contract the service in his or her country of origin, or through companies responsible for arranging transport to the visited country, receiving the associated cellular telephone at the same time it is contracted.

In an alternative embodiment, the calls made by each tourist from his or her associated portable communication means can be free of charge, in which case they will be included in the rental or sale price of the mobile unit.

Also, if needed, the call and service center can forward any call to other related centers. This situation can be considered when a user has the need to establish communication with an organism, official center or specific service provider, both in the country and in his or her country of origin or in any other area. The service provided is thus complete and the system is able to solve any practical need of a user at much lower costs than those incurred in the event that the user must use his or her mobile telephone to manage any of the services or information provided by the system of the invention.

As will be understood, the system proposed by the invention is especially useful and of inestimable help for all those people who visit a country and do not know the language of the visited country, providing them with absolute peace of mind during the time of their stay in said country. The persons skilled in the art will acknowledge that the system can be susceptible to variations and modifications, always respecting the principles of the invention as they have been described above. For example, the calls have been provided for from mobile terminals carried by each tourist or visitor, but the system eventually allows, in the case of theft or failure of the mobile terminal, calls to the call center to also be made from fixed terminals, for example any land line in the local network, at the cost of a normal call.

## Claims

1. A communication and telephone helpline system, particularly a system designed to provide a tourist or visitor with any information or service relating to his or her stay in said country, **characterized in that** it comprises one or more portable communication mobile terminals and an integral tourist call and service center, wherein said mobile terminals include at least one specific telephone number for the caller to establish communication with the mentioned call center, and wherein said call center incorporates the physical and human resources necessary for responding to the calls received and communicating with the caller in the caller's own language.

2. The system according to claim 1, **characterized in that** the call center has means eventually able to forward any call received to other related specific service centers which the caller wishes to access.

3. The system according to claim 1, **characterized in that** the portable communication means consist of cellular telephones.

4. The system according to claim 1, **characterized in that** the communication means with the call center are, alternatively, a land line.

5. The system according to one or more of the previous claims, **characterized in that** the call center includes means for generating informative messages, particularly text messages, which are sent continuously to the portable communication terminals.
